# EUROPEAN PATENT APPLICATION

(11) **EP 4 631 579 A1**
(43) Date of publication of application: **15.10.2025**
(21) Application number: 25159065.9
(22) Date of filing: 20.02.2025
(51) Int. Cl.: A62C 3/07, A62C 3/16, H01M 50/30, H01M 50/383

(54) **BATTERY PACK FIRE EXTINGUISHER**

(30) Priority: 09.04.2024 KR 20240048173
(71) Applicant: SAMSUNG SDI CO., LTD., Yongin-si, Gyeonggi-do 17084 (KR)
(72) Inventor: KIM, Giyoung, 17084 Yongin-si (KR)
(74) Representative: Marks & Clerk LLP

(57) **Abstract**

A battery pack fire extinguisher includes: a plurality of battery cells; a bottom case accommodating the plurality of battery cells; a top case covering the plurality of battery cells and coupled to the bottom case; and a fire extinguishing agent between an inner surface of the top case and one end of one of the plurality of battery cells facing the top case. The fire extinguishing agent has a through hole corresponding to the one of the plurality of battery cells.

## Description

### BACKGROUND

### 1. Field

Aspects of embodiments of the present disclosure relate to a battery pack fire extinguisher.

### 2. Description of the Related Art

An electric vehicle or an energy storage system includes battery packs. When a fire occurs in one battery cell in one of the battery packs, the fire needs to be rapidly extinguished to prevent the fire from spreading to other, surrounding battery cells.

In the battery pack, a hole may be formed when a top case is melted due to the fire (flame) of the battery cell, but the hole may not occur in instances. If the top case melts and the hole is formed, outside air may flow in and quickly cool the battery cell.

However, if there is no hole, the temperature of the battery cell increases because the heat of the flame is transmitted to the battery cell without discharging outside of the case, which may cause the battery cell to cool down more slowly.

When applying a fire extinguishing agent, the fire extinguishing agent is usually positioned in a vertical position above the battery cell where the flame occurs. In this arrangement, the fire extinguishing agent primarily acts to prevent (or extinguish) the flame of the battery cell. Therefore, holes may not be formed in the top case due to a flame.

### SUMMARY

Embodiment of the present disclosure provide a battery pack fire extinguisher that may prevent a fire in one battery cell from spreading to surrounding battery cells. Embodiments of the present disclosure provide a battery pack fire extinguisher that may extinguish a flame with a fire extinguishing agent without blocking the progress of the flame generated in the battery cell.

A battery pack fire extinguisher, according to an embodiment of the present disclosure, includes: a plurality of battery cells; a bottom case accommodating the plurality of battery cells; a top case covering the plurality of battery cells and coupled to the bottom case; and a fire extinguishing agent between an inner surface of the top case and one end of one of the plurality of battery cells facing the top case. The fire extinguishing agent has a through hole in a portion corresponding to the one of the battery cells.

The through hole may correspond to a vent of the one of the plurality of battery cells.

The fire extinguishing agent may be a fire extinguishing agent bar extending in one direction.

The fire extinguishing agent bar may have a plurality of the through holes respectively corresponding to ones of the plurality of battery cells.

The fire extinguishing agent bar may have a thickness, and the through hole(s) may have a first diameter at a first surface facing the top case and a second diameter that is larger than the first diameter at a second surface facing the one of the plurality of battery cells.

The first diameter may be the same as a size of a vent of the one of the plurality of battery cells, the second diameter may be twice the size of the vent, and the through hole may have a first conical surface extending between the first diameter and the second diameter.

The through hole may have a first conical surface extending between the first diameter and the second diameter and may have a groove in the first conical surface.

The groove may have a second conical surface having a larger diameter than the first conical surface.

The fire extinguishing agent bar may have a thickness, and the through hole may have a first end facing the top case and a second end facing the one of the plurality of battery cells. The first and second end of the through hole may have the same diameter.

The through hole may have a cylindrical surface.

The fire extinguishing agent bar may have a thickness, the through hole may have a first conical surface and a groove in the first conical surface, and the groove may have a conical surface.

The groove may have a plurality of conical surfaces connected to each other in the thickness direction.

The fire extinguishing agent may have a quadrangular exterior shape, and the through hole may be at a center of the quadrangular shape.

The fire extinguishing agent may have an exterior triangular shape, and the through hole may be at a center of the triangular shape.

The fire extinguishing agent may have has an exterior cross-shape intersecting at right angles, and the through hole may be at a center of the cross-shape.

The fire extinguishing agent may have an exterior hexagonal star-shape, and the through hole may be at a center of the hexagonal star-shape.

The one of the plurality of battery cells may face the top case through a vent, and the fire extinguishing agent may be arranged between the vent and the top case.

A first battery cell from among the plurality of battery cells may have a first vent facing the top case, a second battery cell from among the plurality of battery cells may have a second vent facing the bottom case, and the fire extinguishing agent may include a first fire extinguishing agent arranged between the first vent and the top case and a second fire extinguishing agent arranged between the second vent and the bottom case.

The plurality of battery cells may be cylindrical rechargeable batteries. The plurality of battery cells may be prismatic rechargeable batteries.

In embodiments of the present disclosure, a fire extinguishing agent is installed between the inner surface of the top case and the battery cell so that a flame from the battery cell is guided to the fire extinguishing agent to ignite the fire extinguishing agent, and the smoke generated from the fire extinguishing agent, that is, the aerosol spray material, is induced into the battery cell to extinguish the fire.

According to embodiments of the present disclosure, because the fire extinguishing agent has a through hole, the ignited flame passes through the through hole to quickly ignite the fire extinguishing agent and to reach the top case to form a hole therein to quickly cool the battery cell.

In addition, according to embodiments of the present disclosure, the smoke generated from the fire extinguishing agent by ignition of the fire extinguishing agent, that is, the air spray material, is guided to the battery cell to quickly extinguish the flame generated by the battery cell.

For example, even though the fire extinguishing agent is arranged between the top case and the battery cell, the fire extinguishing agent may effectively spray the aerosol injection material generated by combustion into the flame of the battery cell without interfering with the flame reaching the top case.

At least some of the above and other features of the invention are set out in the claims.

### BRIEF DESCRIPTION OF THE DRAWINGS

FIG. 1 is a top plan view of a battery pack fire extinguisher according to an embodiment of the present disclosure.
FIG. 2 is a cross-sectional view taken along the line II-II in FIG. 1.
FIG. 3 is a top plan view of a fire extinguishing agent bar arranged between a battery cell and a top case shown in FIG. 2.
FIG. 4 is a cross-sectional view taken along the line IV-IV in FIG. 3.
FIG. 5 is a cross-sectional view of a fire extinguishing agent bar arranged between a battery cell and a top case in a battery pack fire extinguisher according to another embodiment of the present disclosure.
FIG. 6 is a cross-sectional view of a fire extinguishing agent bar arranged between a battery cell and a top case in a battery pack fire extinguisher according to another embodiment of the present disclosure.
FIG. 7 is a cross-sectional view of a fire extinguishing agent bar arranged between a battery cell and a top case in a battery pack fire extinguisher according to another embodiment of the present disclosure.
FIG. 8 is a top plan view of a fire extinguishing agent corresponding to a battery cell in a battery pack fire extinguisher according to another embodiment of the present disclosure.
FIG. 9 is a top plan view of a fire extinguishing agent corresponding to a battery cell in a battery pack fire extinguisher according to another embodiment of the present disclosure.
FIG. 10 is a top plan view of a fire extinguishing agent corresponding to a battery cell in a battery pack fire extinguisher according to another embodiment of the present disclosure.
FIG. 11 is a top plan view of a fire extinguishing agent corresponding to a battery cell in a battery pack fire extinguisher according to another embodiment of the present disclosure.
FIG. 12 is a cross-sectional view of a battery pack fire extinguisher according to another embodiment of the present disclosure.
FIG. 13 is a top plan view of a battery pack fire extinguisher according to another embodiment of the present disclosure.

### DETAILED DESCRIPTION

The present disclosure will be described more fully hereinafter with reference to the accompanying drawings, in which embodiments of the present disclosure are shown. As those skilled in the art would realize, the described embodiments may be modified in various different ways, all without departing from the scope of the present disclosure. The drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In each instance where the specific description may refer to a "n"th diameter, the numeral is non limiting and can be excluded.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

When a fire occurs in one battery cell of a battery pack that includes a plurality of battery cells, a fire extinguishing agent is used to remove (e.g., extinguish) the flame and prevent the fire from spreading to other battery cells in the battery pack. The fire extinguishing agent removes flames caused by a fire in the battery pack. The fire extinguishing agent may be embedded into the battery pack to eliminate the flame in the shortest possible time and to prevent the spread of fire.

The battery cells may be prismatic or circular battery cells. To prevent chain ignition of the battery cells, the battery pack includes (or contains) a fire extinguishing agent. The fire extinguishing agent is installed in a structure in view of operation characteristics at the upper portion of the battery cell, which is more likely source of fire.

The fire extinguishing agent is configured to be ignited and burned by the flame of the ignited battery cell to generate smoke, that is, an aerosol spray material, that extinguishes the flame of the battery cell.

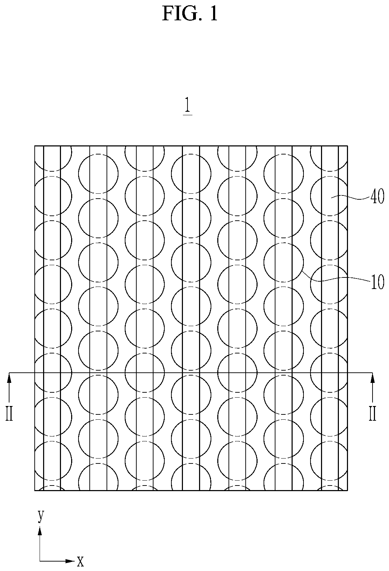

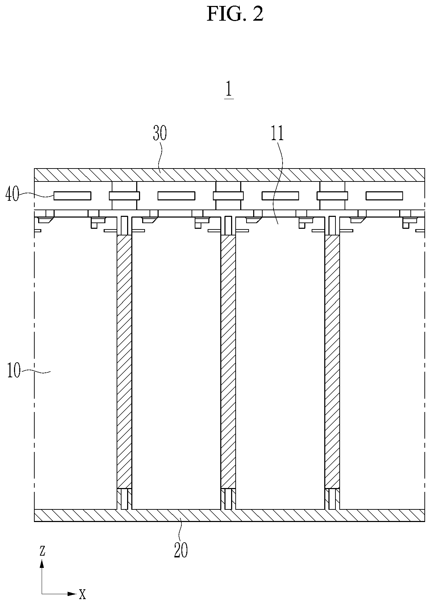

FIG. 1 is a top plan view of a battery pack fire extinguisher according to an embodiment of the present disclosure, and FIG. 2 is a cross-sectional view taken along the line II-II in FIG. 1.

Referring to FIG. 1 and FIG. 2, a battery pack fire extinguisher 1 according to an embodiment includes a plurality of battery cells 10, a bottom case 20 accommodating the battery cells 10, a top case 30 coupled to the bottom case 20, and a fire extinguishing agent 40 provided between (or arranged between) the top case 30 and the battery cells 10.

The or each battery cell 10 is formed as a prismatic rechargeable battery or cylindrical rechargeable battery. The bottom case 20 and the top case 30 are formed to have various sizes depending on the capacity and size of the battery cell 10. The battery pack may be formed by connecting dozens to hundreds of battery cells 10 together in series, parallel, or a mixture of series and parallel. The temperature at which fire extinguishing agent 40 ignites may be in a range of about 380 °C to about 400 °C and may be, in one embodiment, about 390 °C.

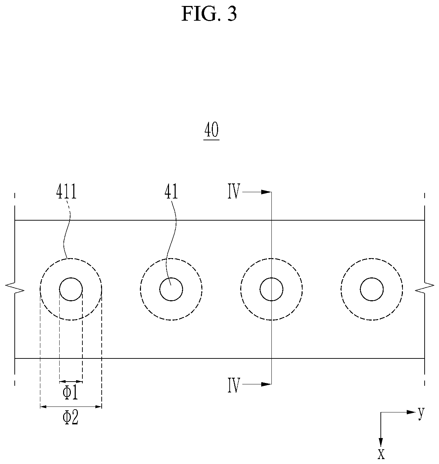

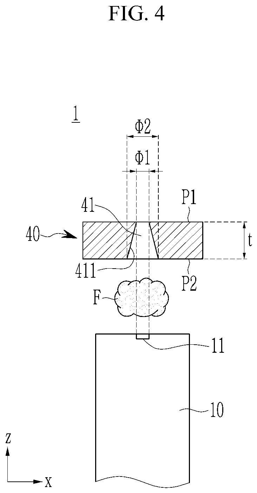

FIG. 3 is a top plan view of a fire extinguishing agent bar arranged between a battery cell 10 and the top case 30 shown in FIG. 2, and FIG. 4 is a cross-sectional view taken along the line IV-IV in FIG. 3.

Referring to FIG. 3 and FIG. 4, the fire extinguishing agent 40 is configured to perform a more effective combustion operation at the initial stage of ignition of the battery cell 10. Accordingly, the battery cell 10 is directed to (e.g., is exposed to or faces) the top case 30 through a vent 11, and, in this embodiment, the fire extinguishing agent 40 is disposed between the vent 11 and the top case 30.

Depending on the structure of the battery pack, the fire extinguishing agent 40 is installed corresponding to (e.g., aligned with) the vent 11 of the battery cell 10. When the vent 11 is above the battery cell 10, the fire extinguishing agent 40 is disposed above the vent 11, as shown in, for example, FIG. 2 and FIG. 4. In another embodiment, when the vent is below the battery cell, the fire extinguishing agent may be disposed below the vent.

The fire extinguishing agent 40 may form (e.g., may be in the form of) a fire extinguishing agent bar that extends in one direction. Because the bar is formed with the fire extinguishing agent 40, the process of installing the fire extinguishing agent 40 may be simplified and the number of working hours may be reduced.

The fire extinguishing agent 40 is ignited by the flame F generated by the ignition of the battery cell 10. The fire extinguishing agent 40 reflects the flame F before the fire extinguishing agent 40 is ignited, and heat is generated when the fire extinguishing agent 40 is ignited. Therefore, the heat generated when the flame F is reflected and the fire extinguishing agent 40 is ignited should be reduced or minimized.

To this end, the fire extinguishing agent 40 has a through hole (e.g., an opening) 41 in a portion corresponding to (e.g., aligned with) the battery cell 10. The through hole 41 is disposed to correspond to the vent 11 of the battery cell 10 and discharges the flame F generated in the battery cell 10 and emitted through the vent 11 (e.g., allows the flame F to pass through the fire extinguishing agent 40). Accordingly, the flame F may reach (e.g., may be exposed to) the top case 30 and may form (e.g., may burn or melt) a hole in the top case 30.

Because the through hole 41 discharges the flame F, reflection of the flame F in the fire extinguishing agent 40 around the through hole 41 may be reduced or minimized and the heat generated during the ignition of the fire extinguishing agent 40 may be reduced or minimized.

In addition, when the bar-shaped fire extinguishing agent 40 has the through hole 41 corresponding to the vent 11, the through hole 41 is formed by removing a portion of the fire extinguishing agent 40. Because the extinguishing agent equivalent to the portion corresponding to the through hole 41 is removed, the amount of fire extinguishing agent 40 is reduced, and as a result, the heat generated upon ignition of the fire extinguishing agent 40, that is, the heat of ignition, may be reduced.

In addition, to reduce or minimize reflection of the flame F and lower the ignition heat of the fire extinguishing agent 40, the through hole 41 may have an inclined surface. With reference to FIG. 4, the fire extinguishing agent 40 has a thickness t, and the through hole 41 has a first diameter Φ1 at a first surface P1 facing the top case 30 and has a second diameter Φ2 larger than the first diameter Φ1 at a second surface P2 facing the battery cell 10. The second diameter Φ2 may be formed to be larger than the diameter of the vent 11 to effectively guide the flame F.

For example, the first diameter Φ 1 has the same size, that is, the same diameter, as the vent 11 of the battery cell 10, and the second diameter Φ 2 is twice the size, that is, twice the diameter, of the vent 11. The first diameter Φ1 and the second diameter Φ2 of the through hole 41 are connected by a first conical surface 411 extending therebetween to form the through hole 41.

Accordingly, the flame F generated in the battery cell 10 is minimally reflected due to the second diameter Φ2 of the through hole 41, and the second diameter Φ2 thereof allows the through hole 41 to be formed to be relatively large, thereby reducing the amount of the fire extinguishing agent 40 to reduce or minimize the ignition heat.

In addition, because the through hole 41 narrows from the second diameter Φ2 to the first diameter Φ1, the flame F is trapped (e.g., is guided) by the first conical surface 411 of the fire extinguishing agent 40, thus, preventing the flame F from returning to the battery cell 10.

For example, because the flame F temporarily stays in the through hole 41, the heat and time necessary to operate the fire extinguishing agent 40, such as a potassium solid compound, may be ensured. Accordingly, the fire extinguishing agent 40 may be ignited more effectively by the flame F staying in the through hole 41.

When the battery cell 10 that is on fire in the battery pack fire extinguisher 1 according to this embodiment, the flame F proceeds toward the fire extinguishing agent 40 disposed above the vent 11 and to the top case 30 through the through hole 41.

The flame F entering the through hole 41 is temporarily trapped in the through hole 41 by the first conical surface 411. Because the flame F cannot return to the battery cell 10, the temperature of the battery cell 10 is not increased.

The flame F staying in the through hole 41 ignites the fire extinguishing agent 40 by ensuring sufficient heat transfer while ensuring the time necessary for the operation of the fire extinguishing agent 40. The smoke generated by the ignition operation of the fire extinguishing agent 40, that is, the aerosol spraying material, is supplied to the battery cell 10 to extinguish the flame F.

In this case, complete combustion of the fire extinguishing agent 40 is induced by the flame F remaining in the through hole 41. Sufficient combustion of the fire extinguishing agent 40 generates sufficient smoke, that is, an aerosol spraying material, thereby further improving the fire extinguishing performance of the battery cell 10.

Hereinafter, various embodiments of the present disclosure will be described. Compared to the above-described embodiment, descriptions of the same or substantially similar components will be omitted or may be only briefly repeated and descriptions of different components will be primarily described.

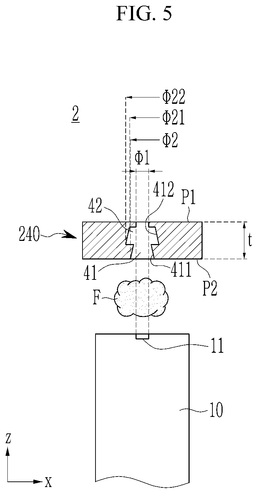

FIG. 5 is a cross-sectional view of a fire extinguishing agent bar arranged between a battery cell and a top case in a battery pack fire extinguisher according to another embodiment of the present disclosure. Referring to FIG. 5, in a battery pack fire extinguisher 2, a through hole 41 in a fire extinguishing agent 240 is connected to (e.g., extends between) a first conical surface 411 having a first diameter Φ 1 and a second diameter Φ 2, and a groove 42 is formed in the first conical surface 411. The groove 42 has a second conical surface 412 having a larger diameter than the first conical surface 411.

The groove 42 is formed with a 21st diameter Φ21 at the first surface P1 side facing the top case 30 and has a 22nd diameter Φ22 greater than the 21st diameter Φ21 at the second surface P2 side facing the battery cell 10. The 21st diameter Φ21 is larger than the first diameter Φ1, and the 22nd diameter Φ22 is larger than the second diameter Φ2 so that the flame F may be effectively guided to stay in the through hole 41 longer. For example, the groove 42 is connected to (e.g., is open to) the second conical surface 412 having the 22nd diameter Φ22 and the 21st diameter Φ21.

Accordingly, reflection of the flame F generated in the battery cell 10 reduced by the second diameter Φ2 of the through hole 41, and the second diameter Φ2 thereof allows the through hole 41 to be formed to be large, thereby reducing the amount of the fire extinguishing agent 40 to reduce or minimize the ignition heat.

In addition, because the groove 42 formed in the through hole 41 widens from the second diameter Φ2 to the 22nd diameter Φ22, narrows from the 22nd diameter Φ22 to the 21st diameter Φ21, and narrows from the 21st diameter Φ21 to the first diameter Φ1, the flame F is trapped in the first conical surface 411 of the fire extinguishing agent 40 and is trapped in the second conical surface 412, thus preventing the flame F from returning to the battery cell 10 and staying longer without returning toward the battery cell 10.

For example, because the flame F temporarily stays in the through hole 41 and also stays in the groove 42, the heat and time necessary to operate the fire extinguishing agent 40, such as a potassium solid compound, may be further ensured. Accordingly, the fire extinguishing agent 40 may be ignited more effectively by the flame F staying in the through hole 41 and the groove 42.

In the battery pack fire extinguisher 2 according to this embodiment, the flame F from a battery cell 10 proceeds toward the fire extinguishing agent 40 disposed above the vent 11 and to the top case 30 through the through hole 41 and the groove 42.

The flame F entering the through hole 41 is temporarily trapped and stays in the through hole 41 by the first conical surface 411 and is further trapped and stays in the groove 42 by the second conical surface 412. Because the flame F cannot return to the battery cell 10, the temperature of the battery cell 10 is not increased.

The flame F staying in the through hole and 41 and the groove 42 ignites the fire extinguishing agent 40 by supplying heat while securing the time necessary for the operation of the fire extinguishing agent 40. The smoke generated by the ignition operation of the fire extinguishing agent 40, that is, the aerosol spraying material, is supplied to the battery cell 10 to extinguish the flame F.

In this embodiment, complete combustion of the fire extinguishing agent 40 is induced by the flame F remaining in the through hole 41 and the groove 42. Sufficient combustion of the fire extinguishing agent 40 sufficiently generates smoke, that is, an aerosol spraying material, thereby further improving the fire extinguishing performance of the battery cell 10.

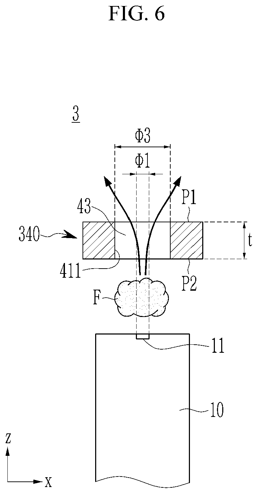

FIG. 6 is a cross-sectional view of a fire extinguishing agent bar arranged between a battery cell and a top case in a battery pack fire extinguisher according to another embodiment of the present disclosure. Referring to FIG. 6, in a battery pack fire extinguisher 3, a through hole 43 of a fire extinguishing agent 340 has a first surface P1 facing the top case 30 and a second surface P2 facing the battery cell 10 have the same diameter Φ3. That is, the through hole 43 is formed by (or has) a cylindrical surface 431 having the diameter (e.g., the constant diameter) Φ3.

Accordingly, reflection of the flame F generated in the battery cell 10 is avoided by the diameter Φ3 of the through hole 43, and the diameter Φ3 thereof allows the through hole 43 to be formed to be large, thereby reducing the amount of the fire extinguishing agent 340 to reduce or minimize the ignition heat.

The diameter Φ3 is formed larger than the first diameter Φ1 so that it may effectively guide the flame F and make it temporarily stay. Accordingly, the flame F generated in the battery cell 10 is not reflected by the diameter Φ3 of the through hole 43, and the diameter Φ3 thereof allows the through hole 43 to be formed to be large, thereby reducing the amount of the fire extinguishing agent 40 to minimize the ignition heat.

In the battery pack fire extinguisher 3 according to this embodiment, the flame F proceeds toward the fire extinguishing agent 340 disposed above the vent 11 and to the top case 30 through the through hole 43 to prevent reflection of the flame F toward the battery cell 10.

The flame F entering the through hole 43 is temporarily trapped and stays in the through hole 43 by the cylindrical surface 431. Because the flame F cannot return to the battery cell 10, the temperature of the battery cell 10 is not increased.

The flame F staying in the through hole 43 ignites the fire extinguishing agent 340 by supplying heat while securing the time necessary for the operation of the fire extinguishing agent 340. The smoke generated by the ignition operation of the fire extinguishing agent 340, that is, the aerosol spraying material, is supplied to the battery cell 10 to extinguish the flame F.

In this embodiment, complete combustion of the fire extinguishing agent 340 is induced by the flame F remaining in the through hole 43. Sufficient combustion of the fire extinguishing agent 340 sufficiently generates smoke, that is, an aerosol spraying material, thereby further improving the fire extinguishing performance of the battery cell 10.

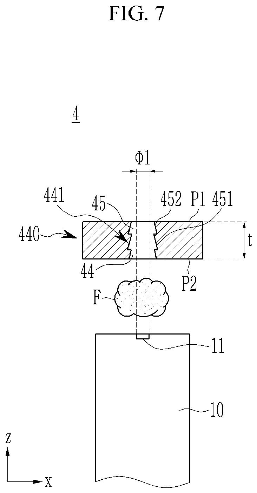

FIG. 7 is a cross-sectional view of a fire extinguishing agent bar arranged between a battery cell and a top case in a battery pack fire extinguisher according to another embodiment of the present disclosure. Referring to FIG. 7, in a battery pack fire extinguisher 4, a through hole 44 of a fire extinguishing agent 440 further includes a first conical surface 441 and a groove 45 provided in the first conical surface 441, and the groove 45 has a conical surface. The groove 45 has a plurality of conical surfaces connected in the thickness (t) direction. In this embodiment, two conical surfaces 451 and 452 are illustrated.

The minimum and maximum diameters of the first conical surface 441 of the through hole 44 are formed to be larger than the diameter Φ1 of the vent 11. In addition, the minimum and maximum diameters of the two conical surfaces 451 and 452 forming the grooves 45 are formed larger than the diameter of the vent 11.

Accordingly, the flame F generated in the battery cell 10 is not reflected due to the through hole 44 and the amount of the fire extinguishing agent 440 is reduced, thereby reducing or minimizing the ignition heat. In addition, because the groove 45 formed in the through hole 44 repeatedly widens and narrows, the flame F is trapped in the fire extinguishing agent 440 and is prevented from returning to the battery cell 10, and at the same time, it temporarily stays longer in the fire extinguishing agent 440.

For example, because the flame F temporarily stays in the through hole 44 and stays in the groove 45, the heat and time necessary to operate the fire extinguishing agent 440, such as a potassium solid compound, may be further ensured. Accordingly, the fire extinguishing agent 440 may be ignited more effectively by the flame F staying in the through hole 44 and the groove 45.

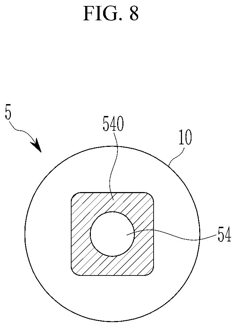

FIG. 8 is a top plan view of a fire extinguishing agent arranged corresponding to a battery cell in a battery pack fire extinguisher according to another embodiment of the present disclosure. Referring to FIG. 8, in a battery pack fire extinguisher 5, a fire extinguishing agent 540 is provided corresponding to the battery cell 10 and has a quadrangular shape as an exterior shape, and a through hole 54 is provided at the center of the quadrangular shape. The fire extinguishing agents 40, 240, 340, and 440 of the above-described embodiments are formed in a bar type, while the fire extinguishing agent 540 of this embodiment is provided in 1:1 correspondence to the battery cells 10.

Accordingly, the flame F generated in the battery cell 10 proceeds toward the corresponding fire extinguishing agent 540, is not reflected due to the through hole 54 of the fire extinguishing agent 540, and reduces the amount of the fire extinguishing agent 540, thereby reducing or minimizing the ignition heat. The flame F of the battery cell 10 may be effectively extinguished by the amount of the fire extinguishing agent 540 having an area formed by the quadrangular shape excluding the through hole 54.

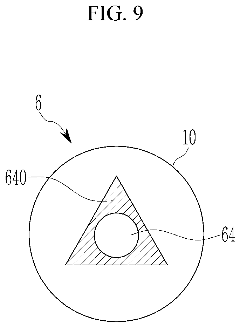

FIG. 9 is a top plan view of a fire extinguishing agent arranged corresponding to a battery cell in a battery pack fire extinguisher according to another embodiment of the present disclosure. Referring to FIG. 9, in a battery pack fire extinguisher 6, a fire extinguishing agent 640 is provided corresponding to the battery cell 10 and has a triangular shape as an exterior shape, and a through hole 64 is provided at the center of the triangular shape.

Accordingly, the flame F generated in the battery cell 10 proceeds toward the corresponding fire extinguishing agent 640, is not reflected due to the through hole 64 of the fire extinguishing agent 640, and reduces the amount of the fire extinguishing agent 640, thereby reducing or minimizing the ignition heat. The flame F of the battery cell 10 may be effectively extinguished by the amount of the fire extinguishing agent 640 having an area formed by the triangular shape excluding the through hole 64.

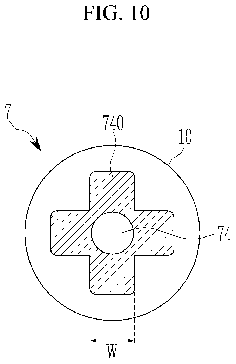

FIG. 10 is a top plan view of a fire extinguishing agent arranged corresponding to a battery cell in a battery pack fire extinguisher according to another embodiment of the present disclosure. Referring to FIG. 10, in a battery pack fire extinguisher 7, a fire extinguishing agent 740 is provided corresponding to the battery cell 10 and has a cross-shape that intersects at right angles with a width W, and a through hole 74 is provided at the center of the cross shape.

Accordingly, the flame F generated in the battery cell 10 proceeds toward the corresponding fire extinguishing agent 740, is not reflected due to the through hole 74 of the fire extinguishing agent 740, and reduces the amount of the fire extinguishing agent 740, thereby reducing or minimizing the ignition heat. The flame F of the battery cell 10 may be effectively extinguished by the amount of the fire extinguishing agent 740 having an area formed by the cross shape excluding the through hole 74.

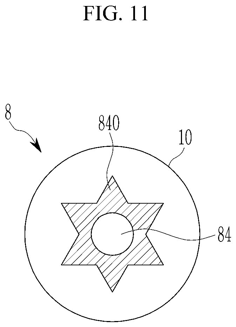

FIG. 11 is a top plan view of a fire extinguishing agent arranged corresponding to a battery cell in a battery pack fire extinguisher according to another embodiment of the present disclosure. Referring to FIG. 11, in a battery pack fire extinguisher 8, a fire extinguishing agent 840 is provided corresponding to the battery cell 10 and has a hexagonal star-shape, and a through hole 84 is provided at the center of the hexagonal star-shape.

Accordingly, the flame F generated in the battery cell 10 proceeds toward the corresponding fire extinguishing agent 840, is not reflected due to the through hole 84 of the fire extinguishing agent 840, and reduces the amount of the fire extinguishing agent 840, thereby reducing or minimizing the ignition heat. The flame F of the battery cell 10 may be effectively extinguished by the amount of the fire extinguishing agent 840 having an area formed by the hexagonal star-shape excluding the through hole 84.

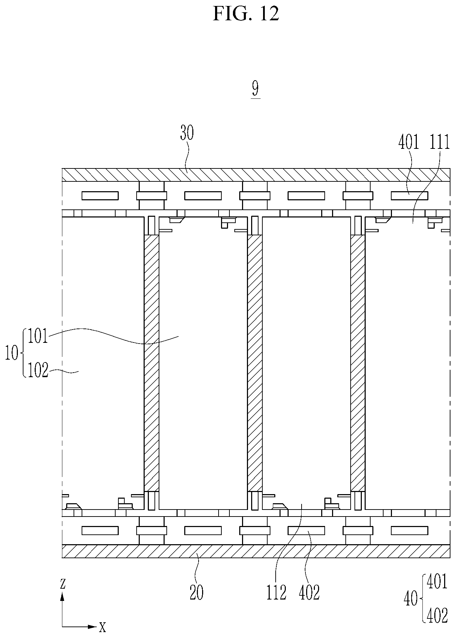

FIG. 12 is a cross-sectional view of a battery pack fire extinguisher according to another embodiment of the present disclosure. Referring to Fig. 12, from among a plurality of battery cells 10 in a battery pack fire extinguisher 9, a first battery cell 101 has a first vent 111 facing the top case 30 and a second battery cell 102 has a second vent 112 facing the bottom case 20.

The fire extinguishing agent 40 includes a first fire extinguishing agent 401 disposed between the first vent 111 and the top case 30, and a second fire extinguishing agent 402 disposed between the second vent 112 and the bottom case 20.

Accordingly, the ignition of the first fire extinguishing agent 401 disposed on the side of the top case 30 is operated by the flame F generated by the ignition of the corresponding first battery cell 101, and the ignition of the second fire extinguishing agent 402 disposed on the side of the bottom case 20 is operated by the flame F generated by the ignition of the corresponding second battery cell 102.

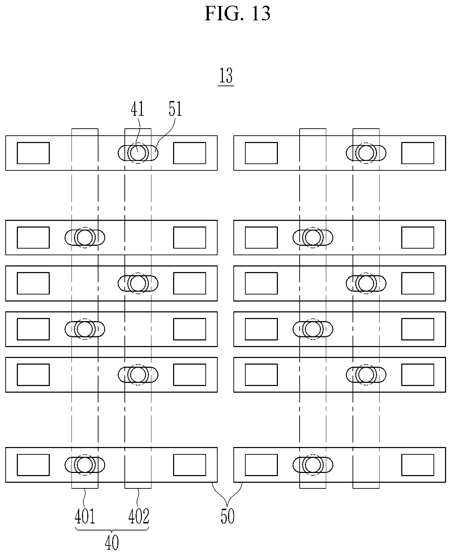

FIG. 13 is a top plan view of a battery pack fire extinguisher according to another embodiment of the present disclosure. Referring to FIG. 13, in a battery pack fire extinguisher 13, a battery cell 50 is a prismatic rechargeable battery.

The fire extinguishing agent 40 forms a fire extinguishing agent bar extending in one direction. Because the bar is formed by the fire extinguishing agent 40, the process of installing the fire extinguishing agent 40 may be simplified and the number of working hours may be reduced. When the vents 51 are alternately disposed left and right, two fire extinguishing agents 40 are disposed above each battery cell 50 and have the through holes 41 corresponding to the vents 51 .

The fire extinguishing agent 40 is ignited by the flame F generated by the ignition of the battery cell 50. Because the through hole 41 discharges the flame F, reflection of the flame F by the fire extinguishing agent 40 around the through hole 41 may be reduced or minimized, and the heat generated during the ignition of the fire extinguishing agent 40 may be reduced or minimized.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims and their equivalents.

**Description of Some Reference Symbols**

| | | | |
|---|---|---|---|
| 1, 2, 3, 4, 5, 6, 7, 8, 9, 13: | battery pack fire extinguisher | | |
| 10: | battery cell | 11: | vent |
| 20: | bottom case | 30: | top case |
| 40: | fire extinguishing agent | 41: | through hole |
| 42: | groove | 43: | through hole |
| 44: | through hole | 45: | groove |
| 50: | battery cell | 51: | vent |
| 54: | through hole | 64: | through hole |
| 74: | through hole | 84: | through hole |
| 101: | first battery cell | 102: | second battery cell |
| 111: | first vent | 112: | second vent |
| 340: | fire extinguishing agent | 401: | first fire extinguishing agent |
| 402: | second fire extinguishing agent | 411: | first conical surface |
| 412: | second conical surface | 431: | cylindrical surface |
| 441: | first conical surface | 451, 452: | conical surface |
| 540: | fire extinguishing agent | 640: | fire extinguishing agent |
| 740: | fire extinguishing agent | 840: | fire extinguishing agent |
| F: | flame | P1: | first surface |
| P2: | second surface | t: | thickness |
| W: | width | Φ1: | first diameter |
| Φ2: | second diameter | Φ21: | 21st diameter |
| Φ22: | 22nd diameter | Φ3: | diameter |

## Claims

1. A battery pack fire extinguisher comprising:
a plurality of battery cells;
a bottom case accommodating the plurality of battery cells;
a top case covering the plurality of battery cells and coupled to the bottom case; and
a fire extinguishing agent between an inner surface of the top case and one end of one of the plurality of battery cells, the fire extinguishing agent having a through hole in a portion corresponding to the one of the plurality of battery cells.

2. The battery pack fire extinguisher of claim 1, wherein the through hole corresponds to a vent of the one of the plurality of battery cells.

3. The battery pack fire extinguisher as claimed in claim 1 or claim 2, wherein the fire extinguishing agent is a fire extinguishing agent bar extending in one direction.

4. The battery pack fire extinguisher as claimed in claim 3, wherein the fire extinguishing agent bar has a plurality of the through holes respectively corresponding to ones of the plurality of battery cells.

5. The battery pack fire extinguisher of claim 3 or claim 4, wherein the fire extinguishing agent bar has a thickness, and
wherein the or each through hole has a first diameter at a first surface facing the top case and a second diameter that is larger than the first diameter at a second surface facing the one of the plurality of battery cells.

6. The battery pack fire extinguisher of claim 5, wherein the first diameter is the same as a size of a vent of the one of the plurality of battery cells,
wherein the second diameter is twice the size of the vent, and
wherein the through hole has a first conical surface extending between the first diameter and the second diameter.

7. The battery pack fire extinguisher of claim 5 or claim 6, wherein the through hole has a first conical surface extending between the first diameter and the second diameter and has a groove in the first conical surface.

8. The battery pack fire extinguisher of claim 7, wherein the groove has a second conical surface having a larger diameter than the first conical surface.

9. The battery pack fire extinguisher of claim 3 or claim 4, wherein the fire extinguishing agent bar has a thickness, and
wherein the through hole has a first end facing the top case and a second end facing the one of the plurality of battery cells, the first and second end of the through hole have the same diameter, and optionally wherein the through hole has a cylindrical surface.

10. The battery pack fire extinguisher of claim 3 or claim 4, wherein the fire extinguishing agent bar has a thickness,
wherein the through hole has a first conical surface and a groove in the first conical surface, and
wherein the groove has a conical surface, or optionally wherein the groove has a plurality of conical surfaces connected to each other in the thickness direction.

11. The battery pack fire extinguisher of any one of the preceding claims, wherein the fire extinguishing agent has one of a) a quadrangular exterior shape, b) a triangular exterior shape, c) a cross-shape exterior shape, with the cross-shape intersecting at right angles, or d) a hexagonal star-shape exterior shape, and
wherein the through hole is at a center of the exterior shape.

12. The battery pack fire extinguisher of any one of the preceding claims, wherein the one of the plurality of battery cells faces the top case through a vent, and
wherein the fire extinguishing agent is arranged between the vent and the top case.

13. The battery pack fire extinguisher of any one of the preceding claims, wherein a first battery cell from among the plurality of battery cells has a first vent facing the top case,
a second battery cell from among the plurality of battery cells has a second vent facing the bottom case, and
wherein the fire extinguishing agent comprises a first fire extinguishing agent arranged between the first vent and the top case and a second fire extinguishing agent arranged between the second vent and the bottom case.

14. The battery pack fire extinguisher of any one of the preceding claims, wherein the plurality of battery cells are cylindrical rechargeable batteries.

15. The battery pack fire extinguisher of any one of claims 1 to 13, wherein the plurality of battery cells are prismatic rechargeable batteries.
